# EUROPÄISCHE PATENTSCHRIFT

(11) **EP 1 647 504 B1**
(45) Veröffentlichungstag und Bekanntmachung des Hinweises auf die Patenterteilung: **10.10.2007**
(21) Anmeldenummer: 05022140.7
(22) Anmeldetag: 11.10.2005
(51) Int. Cl.: B65G 17/08, B65G 17/38

(54) **Gliederkette für Beförderung nach oben, unten und um die Hochachse**
Chain link for transportation upwards, downwards and about vertical axis
Maillon de chaîne pour le transport vers le haut, en bas et autour d'axe vertical

(30) Priorität: 13.10.2004 DE 102004049912
(43) Veröffentlichungstag der Anmeldung: 19.04.2006
(73) Patentinhaber: Bosch Rexroth Aktiengesellschaft, 70184 Stuttgart (DE)
(72) Erfinder: Skljarow, Paul, 71701 Schwieberdingen (DE); Baier, Wolfram, 73760 Ostfildern (DE); Lindemann, Uwe, 71088 Holzgerlingen (DE); Ludwig, Peter, 72072 Tübingen (DE)
(74) Vertreter: Herzog, Markus

(56) Entgegenhaltungen:
- EP-A- 0 001 257
- EP-A- 0 680 898
- EP-A- 1 074 490
- DE-A1- 19 856 908
- GB-A- 1 377 635
- US-A- 5 027 944

## Beschreibung

Die Erfindung betrifft eine Gliederkette mit einer Mehrzahl von Kettengliedern nach dem Oberbegriff des Anspruchs 1.

Bereits an dieser Stelle sei darauf hingewiesen, dass sich in der gesamten Offenbarung der, vorliegenden Erfindungen Richtungsangaben, wie "obere", "untere", "nach oben", "nach unten" und dergleichen, auf eine Orientierung des Kettenglieds beziehen, in welcher dessen Hochrichtung, d.h. dessen sowohl zur Förderrichtung als auch zur Querrichtung orthogonal verlaufender Richtung, im Wesentlichen in Richtung der Schwerkraft verläuft und die Flächennormale der Tragfläche entgegen der Schwerkraft weist, sodass die Tragfläche in der Lage ist, zu fördernde Gegenstände zu tragen.

Beispielsweise aus der DE-A-101 51 863 eine Gliederkette ist bekannt. Bei dieser Gliederkette handelt es sich um eine raumgängige Gliederkette, d.h. sie ist nicht nur in der Lage, in Förderrichtung nach oben bzw. nach unten gekrümmten Bahnverläufen zu folgen, wobei aufeinanderfolgende Kettenglieder um eine zu ihrer Querachse parallel verlaufende Schwenkachse relativ zueinander verschwenkt werden, sondern sie ist auch in der Lage, in Förderrichtung nach rechts bzw. nach links gekrümmten Bahnverläufen zu folgen, wobei aufeinanderfolgende Kettenglieder um eine zu deren Hochachse parallele Schwenkachse relativ zueinander verschwenkt werden. Diese Raumgängigkeit wird durch den besonderen Aufbau der Führungseinheit der Kettenglieder ermöglicht, der in der DE-A-101 51 863 detailliert beschrieben und in praktisch identischer Weise auch bei der Führungseinheit der Kettenglieder der Gliederkette realisiert ist, die Gegenstand der vorliegenden Anmeldung ist.

In der Praxis hat es sich gezeigt, dass bei Einsatz der bekannten Gliederkette der Krümmungsradius von in Förderrichtung nach oben gekrümmten Bahnabschnitten, d.h. von Bahnabschnitten, bei deren Durchlaufen sich die Trageinheiten aufeinanderfolgender Kettenglieder aneinander annähern, durch den Kontakt der Trageinheiten dieser aufeinanderfolgenden Kettenglieder auf relativ große Werte beschränkt ist.

Dieser Nachteil ist in gleicher Weise auch bei den aus den folgenden Druckschriften bekannten Gliederketten vorhanden: DE-A-100 40 081, DE-A-198 56 908, DE-A-2 306 973, EP-B-1 019 307, EP-A-1 148 003, EP-B-0 355 080 B1, EP-B-0 527 584, US-A-5,346,060, US-A-3,807,548, US-B-6,736,259 und US-A-5,027,944.

Aus der EP-A-0 680 898 ist eine Gliederkette bekannt, deren Kettenglieder jeweils in Förderrichtung vorne und hinten an ihrer Tragfläche eine Vielzahl von Vertiefungen bzw. vorspringenden Fingern aufweisen, wobei die Finger derart ausgebildet sind, dass sie in ihrer Form jener der Vertiefungen entsprechen. Bei einer betriebsmäßigen Bewegung der Gliederkette nach links oder rechts stellen die Finger zusammen mit den zu ihnen benachbarten Vertiefungen eine vergrößerte Tragfläche sicher, die ein Eindringen von Gegenständen zwischen benachbarten Kettengliedern verhindert, vorausgesetzt die Gegenstände weisen eine gewisse Mindestgröße auf.

Die in der EP-A-0 995 698 und der EP-B-1 078 869 offenbarten Gliederketten haben einen grundlegend anderen Aufbau. Und zwar ist zwischen zwei aufeinanderfolgenden Kettengliedern jeweils ein Zwischenglied angeordnet, das bei einer Biegung um die Hochachse dem einen Kettenglied und bei einer Biegung um die Querachse dem jeweils anderen Kettenglied zugeordnet ist, wobei es bei jeder dieser Biegungen mit dem ihm zugeordneten Kettenglied jeweils eine bewegungsstarre Einheit bildet. Demgegenüber sind die Kettenglieder der DE-A-101 51 863 und auch der erfindungsgemäßen Gliederkette unmittelbar miteinander verbunden und ermöglichen durch den besonderen, in der DE-A-101 51 863 beschriebenen Aufbau der Führungseinheit gleichwohl eine Biegung sowohl um die Querachse als auch um die Hochachse.

Die gattungsbildende Gliederkette ist aus der EP-A-0 001 257 bekannt. Diese setzt sich aus Kettengliedern zusammen, welche ebenfalls zweistufige plane Trageeinheiten bzw. Tragflächen mit einem unteren und oberen Plattenteil aufweisen, wobei jedoch für diese Kette kennzeichnend die Tragflächen mit einer zwischen den Plattenteilen angeordneten Ausnehmung versehen sind. Die Ausnehmung eines Kettenglieds ist dabei derart, dass in ihr sich ein freies Ende des oberen Plattenteils eines anderen, in Förderrichtung vorangehenden benachbarten Kettenglieds hineinbewegen kann. Dies führt dazu, dass die Kette über eine größere Beweglichkeit verfügt, die es ihr gestattet, auch nach oben gekrümmte Bahnabschnitte zu durchlaufen.

Die Aufgabe der vorliegenden Erfindung besteht darin, eine Gliederkette der eingangs genannten Art anzugeben, welche in der Lage ist, etwaig zwischen den kettengliedern angesammelten Schmutt Selbststandig freitugeben.

Diese Aufgabe wird erfindungsgemäß durch eine Gliederkette gemäß Anspruch 1 gelöst. Dadurch, das die Tragfläche des oberen Plattenteils und die obere Fläche des unteren Plattenteils über eine Freiformfläche miteinander verbunden sind, kann die vorstehend angesprochene Verschmutzungsunanfälligkeit durch entsprechende Gestaltung der Freiformfläche weiter verbessert werden. Bei Ausbildung des Kettenglieds mit Vorsprung und Ausnehmung kann die Freiformfläche vorzugsweise zwei in Querrichtung durch den Vorsprung getrennte Freiformteilflächen umfassen.

Ferner bestehlt durch den ersten Freiformflächenschnitt, der in Querrichtung, d.h. zum Seitenrand des Kettenglieds hin, schräg nach unten abfällt, die Möglichkeit dass etwaig im Bereich des zweiten Freiformflächenabschnitts vorhandene Schmutz bei Kurvenfahrt, d.h. bei Bewegung längs eines nach rechts oder links gekrümmten Bahnabschnitts, durch den Eingriff mit dem Begrenzungsrand des freien Endes des oberen Plattenteils nach außen gedräugt werden kann. Mit dem gleichen Ziel kann zusätzlich oder alternativ auch der zweite Freiformflächenabschnitt in der Nähe der Quermitte des Kettenglieds steiler ausgebildet sein als in der Nähe des Seitenrands des Kettenglieds. Die obere Fläche verläuft derart, dass ihr Abstand zu der Führungseinheit von einem im Wesentlichen in Querrichtung verlaufenden freien Rand des unteren Plattenteils ausgehend mit zunehmender Annäherung an den oberen Plattenteil abnimmt. Durch die erfindungsgemäße Ausbildung des unteren Plattenteils wird in diesem unteren Plattenteil eine Ausnehmung geschaffen, in welche sich der obere Plattenteil des benachbarten Kettenglieds bei Durchlaufen eines nach oben gekrümmten Bahnabschnitts hineinbewegen kann. Dies ermöglicht größere Relativverschwenkungswinkel, als sie bei Gliederketten des Standes der Technik erzielt werden konnten.

Zudem können Schmutzpartikel, die zwischen den Tragflächen aufeinanderfolgender Kettenglieder nach unten fallen, von der im unteren Plattenteil ausgebildeten Ausnehmung aufgenommen werden. Da der obere Plattenteil des benachbarten Kettenglieds bei Bewegung der Gliederkette längs geradlinigen, nach unten gekrümmten oder nur schwach nach oben gekrümmten Bahnabschnitten nicht oder zumindest nicht vollständig in die Ausnehmung eintaucht, verweilen die Schmutzpartikel lose in der Ausnehmung, bis sie beispielsweise in Folge einer Bewegung der Gliederkette längs eines nach links oder rechts gekrümmten Abschnitts der Bahn der Gliederkette beispielsweise in Folge von Zentrifugalkräften aus der Ausnehmung seitlich ausgetragen werden. Daher ist die erfindungsgemäße Gliederkette verglichen mit Gliederketten des Standes der Technik weniger verschmutzungsanfällig, d.h. es besteht ein geringeres Risiko, dass Schmutzpartikel dauerhaft in die Führungseinheit eindringen und dadurch die Lebensdauer der Kette beeinträchtigen.

Die Bewegung des oberen Plattenteils in die im unteren Plattenteil ausgebildete Ausnehmung hinein sowie auch dessen Bewegung aus dieser Ausnehmung wieder heraus kann dann besonders günstig vonstatten gehen, wenn die obere Fläche des unteren Plattenteils und die untere Gegenfläche des oberen Plattenteils zumindest abschnittsweise zueinander komplementär ausgebildet sind. Beispielsweise kann die obere Fläche zumindest abschnittsweise konkav ausgebildet sein.

Wenn die obere Fläche des unteren Plattenteils und die untere Gegenfläche des oberen Plattenteils zweier benachbarter Kettenglieder im unbelasteten Zustand der Gliederkette bei Bewegung längs eines geradlinig verlaufenden Abschnitts der Bahn der Gliederkette einen vorbestimmten Mindestabstand voneinander aufweisen, so kann das Eingreifen des oberen Plattenteils in die Ausnehmung des unteren Plattenteils besonders geräuscharm erfolgen, da die untere Gegenfläche des oberen Plattenteils bei der Annäherungsbewegung der Trageinheiten der beiden Kettenglieder, die von der Relatiwerschwenkung der beiden Kettenglieder um eine zu deren Querachse im Wesentlichen parallel verlaufende Schwenkachse herrührt, nicht an dem unteren Plattenteil entlangschleift. Erst wenn der obere Plattenteil des einen Kettenglieds sich schon nahezu vollständig in die Ausnehmung des unteren Plattenteils des anderen Kettenglieds hineinbewegt hat, kommt ein Kontakt der beiden Plattenteile zustande, und dies auch nur im Bereich des freien Endes des oberen Plattenteils.

Da erfindungsgemäß die obere Fläche des unteren Plattenteils in Richtung von einem freien Rand des unteren Plattenteils auf den oberen Plattenteil zu zumindest abschnittsweise nach unten geneigt verläuft, während die untere Gegenfläche des oberen Plattenteils vorzugsweise im Wesentlichen parallel zu einer durch die Förderrichtung und die Querrichtung aufgespannten Ebene verläuft, liegt der vorbestimmte Mindestabstand vorzugsweise in der Nähe des freien Rands des unteren Plattenteils vor. Der vorbestimmte Mindestabstand kann beispielsweise etwa 0,3 mm betragen, was zum einen die vorstehend beschriebene Freiheit bei Relatiwerschwenkung der beiden aufeinanderfolgenden Kettenglieder ermöglicht, es andererseits aber auch ermöglicht, dass dann, wenn auf der Tragfläche ein zu fördernder Gegenstand angeordnet ist, sich das obere Plattenteil des einen Kettenglieds auf dem unteren Plattenteil des anderen Kettenglieds abstützt.

Um sicherstellen zu können, dass die die einzelnen Abschnitte der Tragfläche aufweisenden Bereiche der oberen Plattenteile aufeinanderfolgender Kettenglieder einander in Querrichtung gesehen überlappen, oder anders ausgedrückt, dass jedem Punkt der Bewegungsbahn der Gliederkette wenigstens ein Kettenglied zugeordnet werden kann, das wenigstens einen Abschnitt der Tragfläche aufweist, der in einer in Querrichtung genommenen Projektion diesem Bahnpunkt entspricht, und somit eine kontinuierliche Fördergutweitergabe von einem Kettenglied zum nächsten ermöglichen zu können, wird in Weiterbildung der Erfindung vorgeschlagen, dass der obere Plattenteil, vorzugsweis etwa im Bereich der Quermitte des Kettenglieds, zum einen einen Vorsprung aufweist, welcher sich über den unteren Plattenteil erstreckt und die Tragfläche verlängert, und zum anderen eine Ausnehmung aufweist, welche zur Aufnahme des Vorsprungs des jeweils benachbarten Kettenglieds dient. Dabei kann zur Geräuschminderung ferner vorgesehen sein, dass der Vorsprung bei Bewegung längs eines geradlinig verlaufenden Abschnitts der Bahn der Gliederkette in der Ausnehmung mit allseitigem Abstand angeordnet ist, während er sich bei Bewegung längs eines um die Hochachse gekrümmt verlaufenden Abschnitts der Bahn der Gliederkette an eine Seite des Rands der Ausnehmung zumindest annähert.

Um auch bei Kurvenfahrt, d.h. bei Bewegung längs eines nach rechts oder links gekrümmten Bahnabschnitts, über im Wesentlichen die gesamte Breite der Kettenglieder eine in Hochrichtung gesehene Überlappung des unteren Plattenteils des einen Kettenglieds und des oberen Plattenteils des jeweils anderen Kettenglieds sicherstellen zu können, wird vorgeschlagen, dass die in Hochrichtung verlaufende Schwenkachse der Führungseinheit zu dem Begrenzungsrand des freien Ende des unteren Plattenteils in Hochrichtung fluchtend angeordnet ist.

Die Erfindung wird im Folgenden an einem Ausführungsbeispiel an Hand der beigefügten Zeichnung näher erläutert werden. Es stellt dar:
- Fig. 1 und 2: perspektivische Darstellungen eines erfindungsgemäßen Kettenglieds, jeweils in Ansicht von schräg oben;
- Fig. 3: eine Seitenansicht des Kettenglieds gemäß Fig. 1 und 2;
- Fig. 4 und 5: Seitenansichten einer aus mehreren identischen Kettengliedern zusammengesetzten Gliederkette bei Bewegung längs eines nach unten gekrümmten Bahnabschnitts, und zwar bei schwacher Krümmung (Fig. 4) bzw. bei starker Krümmung (Fig. 5);
- Fig. 6 und 7: Seitenansichten einer aus mehreren identischen Kettengliedern zusammengesetzten Gliederkette bei Bewegung längs eines nach oben gekrümmten Bahnabschnitts, und zwar bei schwacher Krümmung (Fig. 6) bzw. bei starker Krümmung (Fig. 7);
- Fig. 8: eine Draufsicht einer sich längs eines geradlinigen Bahnabschnitts bewegenden Gliederkette;
- Fig. 9: eine Draufsicht einer sich längs eines nach links gekrümmten Bahnabschnitts bewegenden Gliederkette; und
- Fig.10: eine Druntersicht der Gliederkette gemäß Fig. 9.

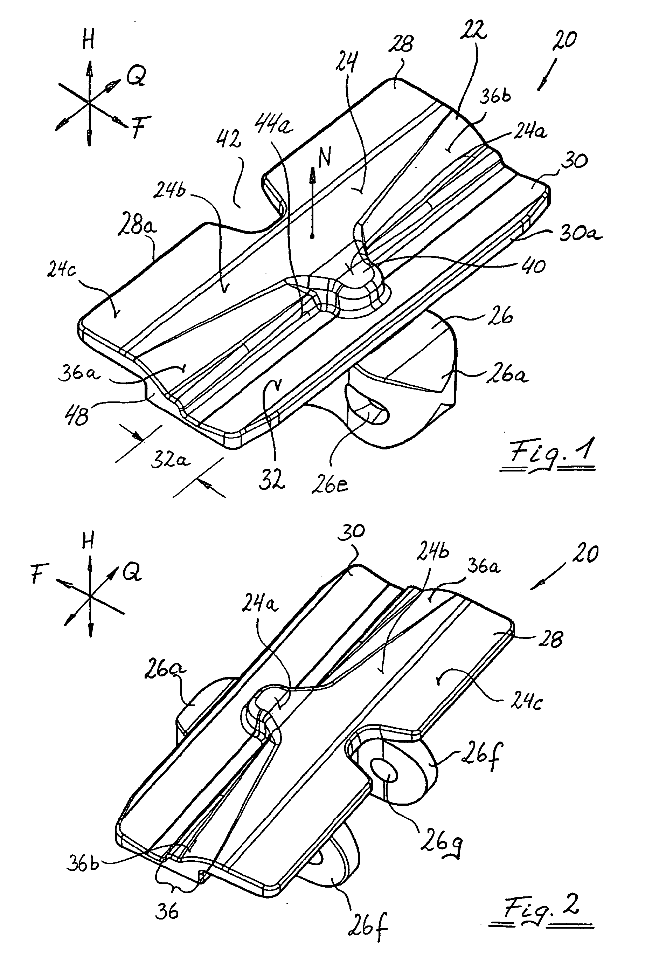

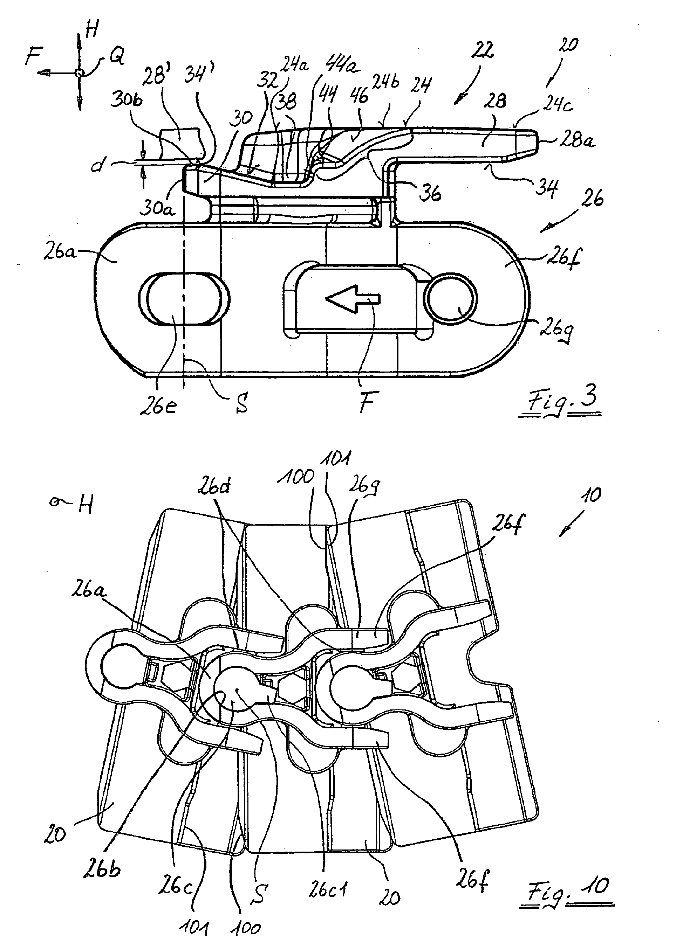

In den Fig. 1 bis 3 ist ein Kettenglied 20 einer Gliederkette 10 dargestellt, welche gemäß Fig. 4 bis 10 aus einer Mehrzahl derartiger Kettenglieder 20 zusammengesetzt ist. Das Kettenglied 20 umfasst eine Trageinheit 22 mit einer Tragfläche 24 und eine unter der Trageinheit 22 angeordnete Führungseinheit 26.

Wenn vorstehend sowie auch im Folgenden sich auf das Kettenglied 20 beziehende Richtungsangaben gemacht werden, so beziehen sich diese Richtungsangaben auf eine Orientierung des Kettenglieds 20, bei welcher die Tragfläche 24 im Wesentlichen horizontal angeordnet ist und ihre Flächennormale N entgegengesetzt zur Richtung der Schwerkraft weist. Darüber hinaus beziehen sich die Richtungsangaben auf eine Blickrichtung in Förderrichtung F, d.h. in Bewegungsrichtung der Gliederkette 10.

Die Führungseinheit 26 des Kettenglieds 20 entspricht in Aufbau und Funktion der Führungseinheit des in der DE 100 40 081 A1 beschriebenen Kettenglieds, auf dessen Beschreibung hiermit zur Ergänzung der vorliegenden Offenbarung verwiesen sei. Hier seien diesbezüglich lediglich die wichtigsten Merkmale zusammengefasst:

In einem Kopfteil 26a der Führungseinheit 26 ist eine im Wesentlichen zylindrische Aufnahme 26b ausgebildet (s. Fig. 10), deren Zylinderachse S sich im Wesentlichen in Hochrichtung H erstreckt. In dieser Aufnahme 26b ist ein sich im Wesentlichen in Hochrichtung H erstreckender Schwenkbolzen 26c aufgenommen, der in Querrichtung Q von einer Schwenkachse 26d durchsetzt ist. Die freien Enden dieser Schwenkachse 26d durchsetzen Öffnungen 26e des Kopfteils 26a und ragen aus diesem heraus (s. auch Fig. 1 bis 3). Die Öffnungen 26e sind als in Umfangsrichtung um die Schwenkachse S des Schwenkbolzens 26c verlaufende Langlöcher ausgebildet. Auf diese Weise kann der Schwenkbolzen 26c in der Aufnahme 26b um seine parallel zur Hochrichtung H verlaufende Schwenkachse S um einen Winkel geschwenkt werden, der zum einen durch die Anlage der Schwenkachse 26d an den Begrenzungsflächen der Öffnungen 26e und zum anderen durch die Anlage eines Ansatzes 26c1 des Schwenkbolzens 26c an der Innenseite der Führungseinheit 26 bestimmt ist.

An den Kopfteil 26a anschließend weist die Führungseinheit 26 zwei Schenkel 26f auf, die von dem Kopfteil 26a gabelförmig abstehen. Der Abstand der beiden Schenkel 26f ist dabei derart gewählt, dass in dem zwischen ihnen vorhandenen Zwischenraum das Kopfteil 26a eines benachbarten Kettenglieds 20 aufgenommen werden kann. Darüber hinaus verfügt jeder der Schenkel 26f über eine sich in Querrichtung Q erstreckende zylindrische Bohrung 26g, die zur Aufnahme der freien Enden der Schwenkachse 26d dient.

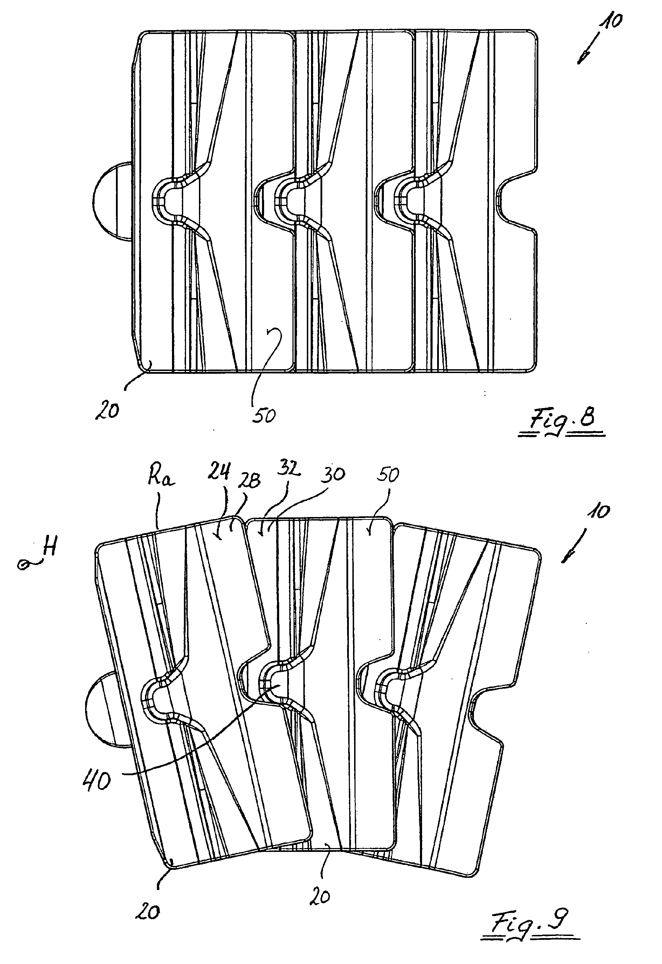

Gemäß Vorstehendem können zwei aufeinanderfolgende Kettenglieder 20 durch Verschwenken des Schwenkbolzens 26c in der Aufnahme 26b um die Hochachse H relativ zueinander verschwenkt werden. Dies ermöglicht es der Gliederkette 10, sich in Förderrichtung F längs nach links bzw. rechts gekrümmten Bahnabschnitten zu bewegen (s. Fig. 9 und 10). Zum anderen ermöglicht es das Zusammenwirken der Schwenkachse 26d mit den Ausnehmungen 26g der Schenkel 26f, die beiden aufeinanderfolgenden Kettenglieder 20 um eine in Querrichtung Q verlaufende Achse relativ zueinander zu verschwenken. Dies erlaubt es der Gliederkette 10, sich längs in Förderrichtung nach unten bzw. nach oben gekrümmten Bahnabschnitten zu bewegen (s. Fig. 4 und 5 bzw. Fig. 6 und 7).

Die vorliegende Erfindung befasst sich aber nicht mit der Ausgestaltung der Führungseinheit 26, sondern vielmehr mit einer besonderen Ausgestaltung der Trageinheit 22.

Wie dies an sich bekannt ist, ist die Trageinheit 22 gestuft ausgebildet, und zwar verfügt sie über einen oberen Plattenteil 28 und einen unteren Plattenteil 30, der in Förderrichtung F weiter vorne angeordnet ist als der obere Plattenteil 28. Auf der Oberseite der Trageinheit 22 verfügt diese über eine Tragfläche 24, die am oberen Plattenteil 28 ausgebildet ist und zum Tragen von mittels der Gliederkette 10 zu fördernden Gegenständen dient. Ferner ist auf der Oberseite des unteren Plattenteils 30 eine obere Fläche 32 ausgebildet, die einer unteren Gegenfläche 34 des oberen Plattenteils 28 gegenüberliegt. Der Übergang zwischen der Tragfläche 24 und der oberen Fläche 32 wird von einer Freiformfläche 36 (s. Fig. 3) gebildet, auf deren Ausbildung nachfolgend noch näher einzugehen sein wird.

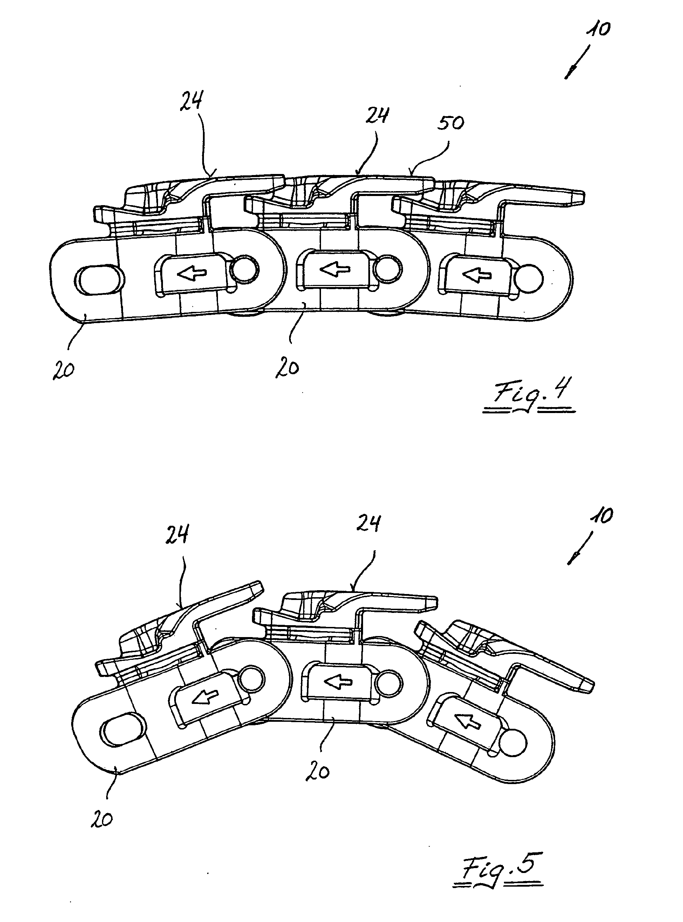

Erfindungsgemäß verläuft die obere Fläche 32 von einem in Förderrichtung F vorauslaufenden freien Ende 30a des unteren Plattenteils 30 in Richtung zur Freiformfläche 36 hin schräg nach unten, sodass in dem unteren Plattenteil 30 eine Ausnehmung 38 ausgebildet ist, die bei Bewegung der Gliederkette 10 längs eines nach oben gekrümmten Bahnabschnitts zur Aufnahme des oberen Plattenteils 28 des benachbarten Kettenglieds 20 dient (s. auch Fig. 3). Durch das Vorsehen dieser Ausnehmung 38 werden verglichen mit einem Kettenglied des Standes der Technik, bei welchem die Oberfläche des unteren Plattenteils 30 sich auf Höhe des höchsten Punktes 30b des unteren Plattenteils 30 im Wesentlichen parallel zu einer durch die Querrichtung Q und die Förderrichtung F aufgespannten Ebene erstreckt, erheblich stärkere Krümmungen bzw. erheblich geringere Krümmungsradien des Bahnverlaufs der Gliederkette 10 ermöglicht (s. auch Fig. 7).

Wenn sich der obere Plattenteil 28 nahezu vollständig in die Ausnehmung 38 hineinbewegt hat, tritt er über seine Anlagefläche 28a in Eingriff mit einer Gegenanlagefläche 44a des unteren Plattenteils 30. Gemäß eine Ausführungsform kommt es jedoch zumindest im unbelasteten Zustand der Gliederkette 10 nicht zu einem Kontakt zwischen der oberen Fläche 32 des unteren Plattenteils 30 und der unteren Gegenfläche 34 des oberen Plattenteils 28, was wiederum zur Minderung der Geräuschentwicklung beiträgt.

Die Ausnehmung 38 hat darüber hinaus den Vorteil, dass sie bei normaler Geradeausfahrt in Förderrichtung F bzw. bei lediglich leicht nach oben bzw. bei nach unten gekrümmten Bahnverläufen (vgl. Fig. 4 bis 6) Schmutzpartikel aufnehmen kann, welche sich von der Tragfläche 24 über die Freiformfläche 36 nach unten in diese Ausnehmung 38 bewegen, wo sie die eigentliche Funktion der Gliederkette 10, nämlich das Fördern von auf der Förderfläche 24 angeordneten Gegenständen, nicht behindern können. Bei Bewegung der Gliederkette 10 längs eines nach links bzw. rechts gekrümmten Bahnabschnitts (s. Fig. 9 und 10) können die Schmutzpartikel dann seitlich aus der Ausnehmung 38 ausgetragen werden.

Wie in Fig. 3 dargestellt ist, ist die obere Fläche 32 konkav gekrümmt ausgebildet, und zwar, wie sich insbesondere aus Fig. 7 ergibt, im Wesentlichen komplementär zu dem Verlauf der unteren Gegenfläche 34 des oberen Plattenteils 28. Ferner ist in Fig. 3 dargestellt, dass im unbelasteten Zustand der Kettenglieder 20 die untere Gegenfläche 34' des benachbarten Kettenglieds 28' von der oberen Fläche 32 des unteren Plattenteils 30 einen Mindestabstand d ausfweist, der beispielsweise in der Größenordnung von 0,3 mm betragen kann. Durch diesen Mindestabstand d wird die Laufruhe der unbelasteten Gliederkette 10 verbessert. Gleichwohl ist der Mindestabstand d ausreichend kein gewählt, dass sich der obere Plattenteil 28' bei Aufnahme der Last eines zu fördernden Gegenstands auf dem unteren Plattenteil 30 im Bereich von dessen höchstem Punktes 30b abstützen kann, um so für eine gleichmäßige Lastaufnahme durch die gesamte Gliederkette 10 zu sorgen.

Um eine gleichmäßige Abstützung der zu fördernden Gegenstände über die gesamte Länge der Gliederkette 10 gewährleisten zu können, ist erfindungsgemäß darüber hinaus der obere Plattenteil 28 mit einem Vorsprung 40 ausgebildet, der in Richtung des freien Endes 30a des unteren Plattenteils 30 in den der oberen Fläche 32 zugeordneten Längenabschnitt 32a (s. Fig. 1) hineinragt. Ferner ist im freien Ende 28a des oberen Plattenteils 28 eine dem Vorsprung 40 entsprechende Ausnehmung 42 ausgebildet, die zur Aufnahme des Vorsprungs 40 des jeweils benachbarten Kettenglieds 20 dient. Auf diese Weise kann in Querrichtung Q gesehen eine Überlappung der Tragflächen 24 aufeinanderfolgender Kettenglieder 20 erreicht werden, die zu einer in Förderrichtung F im Wesentlichen geschlossenen Gesamttragfläche 50 der Gliederkette 10 führt.

Diese Geschlossenheit ist, bei der erfindungsgemäßen Gliederkette 10, wie in Fig. 4 dargestellt, sogar dann gewährleistet, wenn sich die Gliederkette längs eines schwach nach unten gekrümmten Bahnabschnitts bewegt. Erst bei stärker nach unten gerichteter Krümmung der Bahn der Gliederkette 10 öffnet sich die Gesamttragfläche 50, so dass zwischen den Tragflächen 24 der einzelnen Kettenglieder 20 in Querrichtung Q sichtbare Spalte entstehen (siehe Fig. 5).

Um für die Kurvenfahrt in Förderrichtung F nach links bzw. nach rechts symmetrische Verhältnisse bereitstellen zu können, sind der Vorsprung 40 und die Ausnehmung 42 im Wesentlichen im Bereich der Quermitte des Kettenglieds 20 angeordnet. Für Anwendungsfälle, bei denen die Gliederkette 10 sich in dem betriebswichtigen Abschnitt ihrer Bewegungsbahn, d.h. in demjenigen Abschnitt, in dem sie ihre Funktion des Förderns von Gegenständen zu erfüllen hat, im Wesentlichen nur in einer Richtung gekrümmte Bahnabschnitte durchläuft, ist es jedoch auch denkbar, den Vorsprung 40 und die Ausnehmung 42 bezogen auf die Quererstreckung des Kettenglieds 20 außermittig anzuordnen.

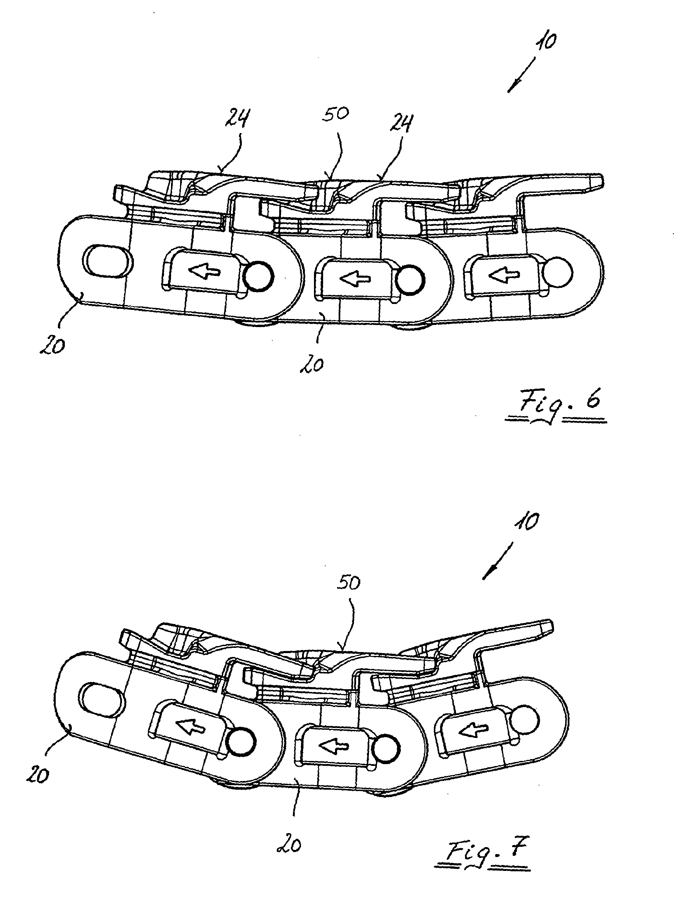

Wie in Fig. 8 dargestellt ist, greift der Vorsprung 40 des einen Kettenglieds 20 zweier benachbarter Kettenglieder zwar so weit in die Ausnehmung 42 des jeweils anderen Kettenglieds 20 ein, dass sich in Querrichtung Q die vorstehend beschriebene Überlappung ergibt. Allerdings kommt der Vorsprung 40 bei der in Fig. 8 dargestellten Geradeausfahrt nicht in Anlage mit dem Begrenzungsrand der Ausnehmung 42, sondern weist von diesem allseitig einen Abstand auf. Bei der in Fig. 9 und 10 dargestellten Kurvenfahrt weist der Vorsprung 40 zum Seitenrand der Ausnehmung 42 einen vorbestimmten Abstand auf, da der minimale Krümmungsradius bei Kurvenfahrt ja bereits durch das Zusammenwirken der Kontaktflächen 100 und 101 festgelegt ist.

In Fig. 9 erkennt man ferner, dass die Erstreckung des unteren Plattenteils 30 in Förderrichtung F derart bemessen ist, dass die Gliederkette 10 bei Kurvenfahrt sich auch an ihrem äußeren Rand Rₐ im Wesentlichen nicht öffnet, sondern die Tragfläche 24 eines von zwei aufeinanderfolgenden Kettengliedern 20 sich in Hochrichtung H gesehen mit der oberen Fläche 32 des jeweils anderen Kettenglieds 20 überlappt.

Die Freiformfläche 36, genauer gesagt jeder von zwei durch den Vorsprung 40 getrennten Freiformflächenabschnitten 36a und 36b, ist aus zwei Teilflächen zusammengesetzt, nämlich einer sich an die obere Fläche 32 anschließenden ersten Teilfläche 44 und einer sich an die Tragfläche 24 anschließenden zweiten Teilfläche 46. Erfindungsgemäß ist die erste Teilfläche 44 dabei vom Vorsprung 40 zum Seitenrand 48 des Kettenglieds 20 hin nach unten abfallend ausgebildet. Schmutzpartikel, die von der Tragfläche 24 über die zweite Freiformteilfläche 46 in den Bereich der ersten Freiformteilfläche 44 gelangen, können auf Grund dieser nach außen abfallenden Ausbildung der ersten Teilfläche 44 durch den Eingriff des nachlaufenden Rands des freien Endes 28a des oberen Plattenteils 28 mit der ersten Teilfläche 44 in Folge einer Bewegung der Gliederkette 10 längs eines in Förderrichtung nach links oder rechts gekrümmten Bahnabschnitts seitlich aus der Gliederkette 10 ausgetragen werden. Die erfindungsgemäße Gliederkette 10 ist also praktisch selbstreinigend ausgebildet. Dabei können locker aufliegende Schmutzpartikel einfach weggeschoben werden, während an der ersten Teilfläche 44 und auf der zweiten Teilfläche 46 anhaftende Schmutzpartikel in Folge des vorstehend beschriebenen Eingriffs zwischen dem freien Ende 28a des oberen Plattenteils und der Freiformfläche 36 von dieser zunächst abgeschabt und dann erst weggeschoben werden.

Nachzutragen ist noch, dass die Tragfläche 24 nicht notwendigerweise vollständig parallel zu einer von Förderrichtung F und Querrichtung Q aufgespannten Ebene zu verlaufen braucht, sondern durchaus geringfügige Abweichungen in der Größenordnung von bis zu 5° von der strengen Parallelität möglich sind, wie dies in den Figuren 1 bis 3 durch die Teilflächen 24a, 24b und 24c der Tragfläche 24 angedeutet ist.

Nachzutragen ist ferner, dass die Schwenkachse S der Führungseinheit 26, wie in Fig. 3 dargestellt ist, zu dem Begrenzungsrand 30a der Fläche 30b am freien Ende des unteren Plattenteils 30 in Hochrichtung H fluchtend angeordnet ist.

## Patentansprüche

1. Gliederkette (10) mit einer Mehrzahl von Kettengliedern (20),
wobei wenigstens ein Kettenglied (20) eine Trageinheit (22) und eine Führungseinheit (26) umfasst,
wobei die Trageinheit (22) mit einer Tragfläche (24) für zu fördernde Gegenstände versehen ist, welche sich zumindest abschnittsweise sowohl in Förderrichtung (F) als auch in Querrichtung (Q) des Kettenglieds (20) erstreckt,
wobei die Führungseinheit (26) auf der von der Tragfläche (24) in Hochrichtung (H) des Kettenglieds (20) abgewandten Seite der Trageinheit (22) angeordnet und zur Verbindung des Kettenglieds (20) mit einem in Förderrichtung (F) vorauslaufenden Kettenglied (20) und einem in Förderrichtung (F) nachlaufenden Kettenglied (20) ausgebildet ist,
wobei die Trageinheit (22) gestuft ausgebildet ist mit einem die Tragfläche (24) aufweisenden oberen Plattenteil (28) und einem bezüglich des oberen Plattenteils (28) in Förderrichtung (F) versetzt angeordneten unteren Plattenteil (30),
wobei der untere Plattenteil (30) eine obere Fläche (32) aufweist, welche einer unteren Gegenfläche (34) des oberen Plattenteils (28) eines benachbarten Kettenglieds (20) gegenüber liegend angeordnet ist,
wobei die obere Fläche (32) des unteren Plattenteils (30) in Richtung von einem freien Rand (30a) des unteren Plattenteils (30) auf den oberen Plattenteil (28) zu zumindest abschnittsweise nach unten geneigt verläuft,
wobei die Tragfläche (24) des oberen Plattenteils (28) und die obere Fläche (32) des unteren Plattenteils (30) über eine Freiformfläche (36) miteinander verbunden sind,
wobei die Freiformfläche (36) zwei in Förderrichtung (F) ineinander übergehende Freiformflächenabschnitte (44, 46) aufweist, nämlich einen an die obere Fläche (32) angrenzenden ersten Freiformflächenabschnitt (44) und einen an die Tragfläche (24) angrenzenden zweiten Freiformflächenabschnitt (46),
**dadurch gekennzeichnet, dass** der erste Freiformflächenabschnitt (44) zum Seitenrand (48) des Kettenglieds (20) hin schräg nach unten abfällt.

2. Gliederkette nach Anspruch 1,
**dadurch gekennzeichnet, dass** der zweite Freiformflächenabschnitt (46) in der Nähe der Quermitte des Kettenglieds (20) steiler ausgebildet ist als in der Nähe des Seitenrands (48) des Kettenglieds (20).

3. Gliederkette nach Anspruch 1 oder 2,
**dadurch gekennzeichnet, dass** die obere Fläche (32) des unteren Plattenteils (30) und die untere Gegenfläche (34) des oberen Plattenteils (28) zumindest abschnittsweise zueinander komplementär ausgebildet sind.

4. Gliederkette nach einem der Ansprüche 1 bis 3,
**dadurch gekennzeichnet, dass** die obere Fläche (32) zumindest abschnittsweise konkav ausgebildet ist.

5. Gliederkette nach einem der Ansprüche 1 bis 4,
**dadurch gekennzeichnet, dass** die obere Fläche (32) des unteren Plattenteils (30) und die untere Gegenfläche (34) des oberen Plattenteils (28) zweier benachbarter Kettenglieder (20) im unbelasteten Zustand der Gliederkette (10) bei Bewegung längs eines geradlinig verlaufenden Abschnitts der Bahn der Gliederkette (10) einen vorbestimmten Mindestabstand (d) voneinander aufweisen.

6. Gliederkette nach einem der Ansprüche 1 bis 5,
**dadurch gekennzeichnet, dass** der obere Plattenteil (28), vorzugsweise etwa im Bereich der Quermitte des Kettenglieds (20), zum einen wenigstens einen Vorsprung (40) aufweist, vorzugsweise genau einen Vorsprung (40), welcher sich über den unteren Plattenteil (30) erstreckt und die Tragfläche (24) verlängert, und zum anderen wenigstens eine Ausnehmung (42), vorzugsweise genau eine Ausnehmung (42), welche zur Aufnahme des Vorsprungs (40) des jeweils benachbarten Kettenglieds (20) dient.

7. Gliederkette nach Anspruch 6,
**dadurch gekennzeichnet, dass** der Vorsprung (40) bei Bewegung längs eines geradlinig verlaufenden Abschnitts der Bahn der Gliederkette (10) in der Ausnehmung (42) mit allseitigem Abstand angeordnet ist, während er sich bei Bewegung längs eines um die Hochachse (H) gekrümmt verlaufenden Abschnitts der Bahn der Gliederkette (10) an eine Seite des Rands der Ausnehmung (42) zumindest annähert.

8. Gliederkette nach den Ansprüchen 1 und 6 sowie gewünschtenfalls Anspruch 7,
**dadurch gekennzeichnet, dass** die Freiformfläche (36) bei Ausbildung des Kettenglieds (20) mit Vorsprung (40) und Ausnehmung (42) vorzugsweise zwei in Querrichtung (Q) durch den Vorsprung (40) getrennte Freiformteilflächen (36a, 36b) umfasst.

9. Gliederkette nach einem der Ansprüche 1 bis 8,
**dadurch gekennzeichnet, dass** eine Schwenkachse (S) der Führungseinheit (26) zu dem Begrenzungsrand (30a) der Fläche (30b) am freien Ende des unteren Plattenteils (30) in Hochrichtung (H) fluchtend angeordnet ist.

## Claims

1. A link chain (10) with a plurality of chain links (20),
wherein at least one chain link (20) comprises a support unit (22) and a guide unit (26),
wherein the support unit (22) is provided with a support surface (24) for articles to be conveyed, which at least in portions extends both in the conveying direction (F) and in the transverse direction (Q) of the chain link (20),
wherein the guide unit (26) is arranged on the side of the support unit (22) remote from the support surface (24) in the vertical direction (H) of the chain link (20) and is designed to connect the chain link (20) to a chain link (20) leading in the conveying direction (F) and to a chain link (20) trailing in the conveying direction (F),
wherein the support unit (22) is of stepped form with an upper plate part (28) having the support surface (24) and with a lower plate part (30) arranged offset in the conveying direction (F) with respect to the upper plate part (28),
wherein the lower plate part (30) has an upper surface (32) which is arranged to lie opposite a lower counter surface (34) of the upper plate part (28) of an adjacent chain link (20),
wherein the upper surface (32) of the lower plate part (30) extends, at least in portions, downwardly inclined from a free edge (30a) of the lower plate part (30) towards the upper plate part (28),
wherein the support surface (24) of the upper plate part (28) and the upper surface. (32) of the lower plate part (30) are connected to one another via a free-form surface (36),
wherein the free-form surface (36) has two free-form surface portions (44,46) merging into one another in the in the conveying direction (F), namely a first free-form surface portion (44) adjoining the upper surface (32) and a second free-form surface portion (46) adjoining the support surface (24),
**characterised in that** the first free-form surface portion (44) descends downwardly inclined towards the lateral edge (48) of the chain link (20).

2. A tensioning device according to Claim 1, **characterised in that** the second free-form surface portion (46) is more steeply shaped in the vicinity of the transverse centre of the chain link (20) than in the vicinity of the lateral edge (48) of the chain link (20).

3. A link chain according to Claim 1 or 2, **characterised in that** the upper surface (32) of the lower plate part (30) and the lower counter surface (34) of the upper plate (28) are formed complementary to one another at least in portions.

4. A link chain according to any one of Claims 1 to 3,
**characterised in that** the upper surface (32) is formed concave at least in portions.

5. A link chain according to any one of Claims 1 to 4,
**characterised in that** the upper surface (32) of the lower plate part (30) and the lower counter surface (34) of the upper plate part (28) of two adjacent chain links (20) in the unloaded state of the link chain (10) have a predetermined minimum distance (d) apart when moving along a straight section of the path of the link chain (10).

6. A link chain according to any one of Claims 1 to 5,
**characterised in that** the upper plate part (28), preferably approximately in the vicinity of the transverse centre of the chain link (2), on the one hand, has at least one projection (40), preferably exactly one projection (40, which extends over the lower plate part (30) and lengthens the support surface (24), and, on the other hand, at least one recess (42), preferably exactly one recess (42), which serves to receive the projection (40) of the respective adjacent chain link (20).

7. A link chain according to Claim 6, **characterised in that** when moving along a straight section of the path of the link chain (10) the projection (40) is disposed in the recess (42) with all-round spacing, whereas when moving along a section of the path of the link chain (10) extending curved about the vertical axis (H) it at least approaches one side of the edge of the recess (42).

8. A link chain according to Claims 1 and 6, as well as optionally Claim 7,
**characterised in that** if the chain link (20) is formed with a projection (40) and a recess (42) the free-form surface (36) preferably comprises two free-form surface portions (36a,36b) separated in the transverse direction (Q) by the projection (40).

9. A link chain according to any one of Claims 1 to 8,
**characterised in that** a pivot axis (S) of the guide unit (26) is arranged in the vertical direction (H) in alignment with the boundary edge (30a) of the surface (30b) at the free end of the lower plate part (30).

## Revendications

1. Chaîne à maillons (10) comprenant une pluralité de maillons de chaîne (20),
au moins un maillon de chaîne (20) comportant une unité de support (22) et une unité de guidage (26),
l'unité de support (22) étant pourvue d'une surface de support (24) pour les objets à transporter, laquelle s'étend au moins par sections aussi bien dans la direction de transport (F) que dans la direction transversale (Q) du maillon de chaîne (20),
l'unité de guidage (26) étant disposée sur le côté de l'unité de support (22) opposé à la surface de support (24) dans la direction en hauteur (H) du maillon de chaîne (20) et conçue pour relier le maillon de chaîne (20) à un maillon de chaîne (20) situé à l'avant dans la direction de transport (F) et à un maillon de chaîne (20) situé à l'arrière dans la direction de transport (F),
l'unité de support (22) étant conçue par étages avec une partie supérieure de plaque (28) comprenant la surface de support (24) et une partie inférieure de plaque (30) disposée en décalé par rapport à la partie supérieure de plaque (28) dans la direction de transport (F),
la partie inférieure de plaque (30) comprenant une surface supérieure (32), laquelle est disposée à l'opposé d'une surface antagoniste inférieure (34) de la partie supérieure de plaque (28) d'un maillon de chaîne (20) voisin,
la surface supérieure (32) de la partie inférieure de plaque (30) s'étendant dans une direction allant d'un bord libre (30a) de la partie inférieure de plaque (30) à la partie supérieure de plaque (28) en étant inclinée vers le bas au moins par sections,
la surface de support (24) de la partie supérieure de plaque (28) et la surface supérieure (32) de la partie inférieur de plaque (30) étant reliées l'une à l'autre par une surface à formage libre (36),
la surface à formage libre (36) comprenant deux sections de surface à formage libre (44, 46) passant l'une dans l'autre dans la direction de transport (F), à savoir une première section de surface à formage libre (44) adjacente à la surface supérieure (32) et une seconde section de surface à formage libre (46) adjacente à la surface de support (24),
**caractérisée en ce que** la première section de surface à formage libre (44) est inclinée de manière oblique vers le bas en direction du bord latéral (48) du maillon de chaîne (20).

2. Chaîne à maillons selon la revendication 1,
**caractérisée en ce que** la seconde section de surface à formage libre (46) est conçue en étant plus escarpée à proximité du centre transversal du maillon de chaîne (20) qu'à proximité du bord latéral (48) du maillon de chaîne (20).

3. Chaîne à maillons selon la revendication 1 ou 2,
**caractérisée en ce que** la surface supérieure (32) de la partie inférieure de plaque (30) et la surface antagoniste inférieure (34) de la partie supérieure de plaque (28) sont conçues au moins par sections en étant complémentaires l'une de l'autre.

4. Chaîne à maillons selon l'une quelconque des revendications 1 à 3,
**caractérisée en ce que** la surface supérieure (32) est conçue de façon concave au moins par sections.

5. Chaîne à maillons selon l'une quelconque des revendications 1 à 4,
**caractérisée en ce que** la surface supérieure (32) de la partie inférieure de plaque (30) et la surface antagoniste inférieure (34) de la partie supérieure de plaque (28) de deux maillons de chaîne (20) voisins à l'état non sollicité de la chaîne à maillons (10), au cours d'un déplacement le long d'une section, s'étendant de façon rectiligne, de la bande de la chaîne à maillons (10), présentent un écart minimal prédéfini (d) l'une par rapport à l'autre.

6. Chaîne à maillons selon l'une quelconque des revendications 1 à 5,
**caractérisée en ce que** la partie supérieure de plaque (28), de préférence approximativement dans la zone du centre transversal du maillon de chaîne (20), comprend d'une part au moins une saillie (40), de préférence juste une saillie (40), laquelle s'étend au-dessus de la partie inférieure de plaque (30) et rallonge la surface de support (24), et d'autre part au moins un évidement (42), de préférence juste un évidement (42), lequel sert à recevoir la saillie (40) de chaque maillon de chaîne (20) voisin.

7. Chaîne à maillons selon la revendication 6,
**caractérisée en ce que** la saillie (40), au cours d'un déplacement le long d'une section, s'étendant de façon rectiligne, de la bande de la chaîne à maillons (10), est disposée dans l'évidement (42) avec un écart de tous côtés, tandis qu'au cours d'un déplacement le long d'une section de la bande de la chaîne à maillons (10), s'étendant de façon courbée autour de l'axe en hauteur (H), il se rapproche au moins d'un côté du bord de l'évidement (42).

8. Chaîne à maillons selon l'une quelconque des revendications 1 à 6 ainsi que la revendication 7 le cas échéant,
**caractérisée en ce que** la surface à formage libre (36), lorsque le maillon de chaîne (20) est conçu avec une saillie (40) et un évidement (42), comporte de préférence deux surfaces partielles à formage libre (36a, 36b) séparées dans la direction transversale (Q) par la saillie (40).

9. Chaîne à maillons selon l'une quelconque des revendications 1 à 8,
**caractérisée en ce qu'**un axe de pivotement (S) de l'unité de guidage (26) est disposé en s'alignant par rapport au bord de délimitation (30a) de la surface (30b) sur l'extrémité libre de la partie inférieure de plaque (30) dans la direction en hauteur (H).
